# EUROPÄISCHE PATENTSCHRIFT

(11) **EP 2 581 002 B1**
(45) Veröffentlichungstag und Bekanntmachung des Hinweises auf die Patenterteilung: **31.12.2014**
(21) Anmeldenummer: 12401204.8
(22) Anmeldetag: 10.10.2012
(51) Int. Cl.: A47J 31/36

(54) **Brühgruppe**
Brewing assembly
Groupe de distribution

(30) Priorität: 14.10.2011 DE 102011116182
(43) Veröffentlichungstag der Anmeldung: 17.04.2013
(60) Teilanmeldung: 13005027.1
(73) Patentinhaber: Severin Elektrogeräte GmbH, 59846 Sundern (DE)
(72) Erfinder: Köster, Christian, 59581 Warstein-Hirschberg (DE); Krug, Jörg, 35239 Steffenberg (DE); Kroesen, Klaus, 46509 Xanten (DE)
(74) Vertreter: Köchling, Conrad-Joachim

(56) Entgegenhaltungen:
- EP-A1- 1 393 663
- DE-B3-102007 042 379
- US-A1- 2005 193 891

## Beschreibung

Die Erfindung betrifft eine Brühgruppe für eine Kaffeemaschine, insbesondere zur Zubereitung von Espresso, mit einer Brühkammer zur Aufnahme von gemahlenem Kaffeemehl sowie mit Teilen für die Verdichtung des in der Brühkammer befindlichen Kaffeemehls und zum Auswerfen des feuchten Kaffeemehlrestes aus der Brühkammer, wobei des Weiteren Anschlüsse für die Zufuhr von Heißwasser und für den Ablauf des Filtrates vorgesehen sind, wobei die Brühkammer durch einen stationären unbeweglich angeordneten Zylinder gebildet ist, der auf der Oberseite nahe seines ersten Endes eine Befüllöffnung für Kaffeemehl aufweist, als Teil für die Verdichtung des in die Brühkammer eingefüllten Kaffeemehls am ersten Ende des Zylinders ein mittels eines ersten Stellantriebes axial verstellbarer Kolben vorgesehen ist, der in der Befüllstellung die Befüllöffnung freilässt und in der Brühstellung über die Befüllöffnung hinaus in Richtung auf eine am zweiten Ende des Zylinders vorgesehene Verschlussplatte mit zweitem Stellantrieb verstellt ist, die in der Befüllstellung und in der Brühstellung das zweite Ende des Zylinders verschließt und in der Auswurfstellung das zweite Ende des Zylinders freigibt, wobei der Kolben in der Auswurfstellung bei in Freigabelage verstellter Verschlussplatte mittels des ersten Stellantriebes in eine Auswurfstellung in Richtung zum zweiten Ende des Zylinders verstellbar ist, wobei der Kolben und die Verschlussplatte nach dem Auswerfen des feuchten Kaffeemehlrestes in die Ausgangsstellung zurück verstellbar sind, und wobei die Anschlüsse für Heißwasserzufuhr und Filtratablauf an der Verschlussplatte und an dem Kolben vorgesehen sind.

Eine Brühgruppe dieser Art ist beispielsweise in der US 2005/193891 A1 und in der DE 10 2007 042 379 B 3 beschrieben.

Bei der bekannten Anordnung, die sich in der Praxis bewährt hat, wird ein Nachteil darin gesehen, dass bei der bestimmungsgemäßen Benutzung der Brühgruppe in einer Kaffeemaschine Verunreinigungen auftreten können, die den Antriebsmechanismus der Brühgruppe beeinträchtigen. Darüber hinaus wurde festgestellt, dass die Verschlussplatte unter Umständen bei Aufbringung des Brühdruckes in der Brühkammer unerwünscht verstellt wird oder aber Getriebeglieder, die mit der Verschlussplatte gekoppelt sind, übermäßig beansprucht werden, so dass auf Dauer ein übermäßiger Verschleiß auftreten kann.

Ausgehend von diesem Stand der Technik liegt der Erfindung die Aufgabe zugrunde, eine Brühgruppe gattungsgemäßer Art zu schaffen, bei der betriebsbedingte Verunreinigungen des Antriebsmechanismus und dergleichen weitestgehend vermieden sind und bei der ein übermäßiger Verschleiß der Antriebsmittel für die Verschlussplatte ebenfalls vermieden wird.

Zur Lösung dieser Aufgabe schlägt die Erfindung vor, dass die Verschlussplatte außen am Zylinder nahe dessen zweitem Ende angelenkt und um diese erste Anlenkstelle aus der Ausgangsstellung in die Freigabestellung verschwenkbar ist, dass seitlich am Zylinder außenseitig einander gegenüberliegend mit Deckeln geschlossene Kammern ausgebildet sind, in denen jeweils ein als Zahnrad ausgebildetes Steuerrad drehbar gelagert ist, wobei die Steuerräder mit einer Zahnradwelle in Eingriff sind, die in einer Gehäusetasche gelagert ist und mit einem Kupplungsbereich axial aus der Gehäusetasche vorragt, dass an den Steuerrädern Pleuelstangen exzentrisch an zweiten Anlenkstellen angelenkt sind, die jeweils einen radialen Schlitz der Kammer durchgreifen und mit den aus den Schlitzen vorragenden Enden an der Verschlussklappe außenseitig, auf deren dem Kolben abgewandten Seite -mit Abstand von der ersten Anlenkstelle der Verschlussplatte am Zylinder- an dritten Anlenkstellen angelenkt sind, wobei die zweiten und dritten Anlenkstellen und die Drehachsen der Steuerräder in der Ausgangsstellung auf einer gedachten Geraden liegen, die parallel zur Längsmittelachse des Zylinders verläuft.

Anders als im Stand der Technik ist die Verschlussplatte nicht lediglich an einer Kolbenstange angelenkt, sondern sie ist am Zylinder außenseitig nahe dessen zweiten Ende angelenkt und um diese Anlenkstelle schwenkbar. Zur Betätigung der Verschwenkung sind als Zahnräder ausgebildete Steuerräder und eine Zahnradwelle vorgesehen, die jeweils gekapselt in Kammern angeordnet sind, die außenseitig am Zylinder angeformt oder ausgebildet sind. Aus der Gehäusetasche, die die Zahnradwelle aufnimmt, ragt lediglich ein Kupplungsbereich vor, der zur Ankopplung des Antriebsmotors dient. Zur Betätigung der Verschlussplatte sind an den Steuerrädern exzentrisch Pleuelstangen angelenkt, die jeweils einen radialen Schlitz der Kammern durchgreifen, in denen die Steuerräder angeordnet sind, wobei die Pleuelstangen mit einem Endbereich an der Verschlussplatte angelenkt sind, und zwar mit Abstand von der ersten Anlenkstelle. Durch diese Ausgestaltung und die Ausbildung, wonach die zweiten und dritten Anlenkstellen sowie die Drehachsen der Steuerräder in der Ausgangsstellung auf einer gedachten Geraden liegen, die parallel zur Längsmittelachse des Zylinders verläuft, wird erreicht, dass im geschlossenen Zustand der Brühkammer und der Verschlussplatte der Kolbenanpressdruck, der mit erheblichem Druck auf der Verschlussplatte lastet, problemlos aufgenommen wird, weil die Pleuelstange sich in einer Totpunktlage befindet, also kein Moment um die Steuerachse ausgeübt wird. Zudem haken die Pleuelstangen in Bolzen ein, die im Gehäuse und Gehäusedeckel gelagert sind. Durch Betätigung des Antriebsmotors kann die Drehung der Steuerräder erfolgen, wodurch die exzentrisch an den Steuerrädern angelenkte Pleuelstange mitgenommen und die Verschlussplatte zwangsgeöffnet wird. Bei umgekehrter Antriebsbewegung des Antriebsmotors wird wiederum die Verschlusslage erreicht.

Bei geschlossener Verschlussplatte kann z.B. durch eine Pleuelstange oder ein an ihr vorgesehenes hakenartiges Element ein am Support vorgesehener Mikroschalter betätigt werden, der mit einer Steuerung der Kaffeemaschine korrespondiert und der Steuerung das Signal gibt, dass die Verschlussklappe sich in korrekter Schließlage befindet, so dass die Brühkammer bestimmungsgemäß gefüllt und durchströmt werden kann.

Eine besondere bevorzugte Weiterbildung wird darin gesehen, dass am zweiten Ende des Zylinders eine Abstreifvorrichtung quer zur Zylindermittellängsachse verstellbar angebracht ist, die seitlich vorragende Mitnehmer aufweist, die jeweils in einen Steuerschlitz eingreifen, der in den Pleuelstangen ausgebildet ist, so dass die Abstreifvorrichtung bei nahezu vollständig geöffneter Verschlussplatte beginnend bis zur Position der vollständig geöffneten Verschlussplatte zwangsweise aus einer Lage außerhalb der Fluchtlinie, die vom Zylinder aufgespannt ist, in eine Lage in dessen Fluchtlinie verstellt ist, so dass an dem verstellbaren Kolben anhaftender Tresterkuchen abgestreift wird, und dass die Abstreifvorrichtung bei aus der Öffnungsstellung zurück in die Ausgangsstellung verschwenkter Verschlussplatte gegenüber deren Schließbewegung voreilend zurückverstellt ist.

Durch diese Ausbildung wird erreicht, dass beim Öffnen der Verschlussplatte und beim Auswerfen des Tresterkuchens dieser mit der Abstreifvorrichtung beaufschlagt wird, so dass an dem verstellbaren Kolben anhaftender Tresterkuchen vollständig abgestreift wird. Wenn bestimmungsgemäß der verstellbare Kolben zum Ausstoßen des Tresterkuchens vorfährt, wird das verbrauchte Kaffeemehl (der Tresterkuchen) mit der Abstreifvorrichtung durch eine Translationsbewegung entfernt. Insbesondere kann die Abstreifvorrichtung durch eine Kunststofflippe gebildet sein, die sich durch eine seitliche Führung, die seitlich neben dem Zylinder angeordnet ist, auf und ab bewegen kann. Der Antrieb erfolgt über die Pleuelstangen, welche die an der Abstreifvorrichtung angebrachten Mitnehmer in einer Nut führen. Die Bewegung der Mitnehmer bestimmt sich durch die Geometrie des Klappenmechanismus, kann aber ebenso über die Führung der Nut beeinflusst werden. Die Nut in Form der Steuerschlitze ist so geformt, dass sich die Abstreifvorrichtung erst bei fast vollständig geöffneter Verschlussplatte nach unten bewegt, um den Abstreifvorgang durchzuführen. Hierdurch wird eine Kollision mit anderen Bestandteilen der Vorrichtung vermieden. Durch die Zwangsführung wird zudem die Rückführung in die Grundposition sichergestellt, wenn die Verschlussplatte wieder in die Grundstellung (in die geschlossene Lage) zurückgeführt wird.

Eine weitere Maßnahme, die der Verbesserung der Betriebssicherheit der Brühgruppe dient, besteht darin, dass in die als Kanal ausgebildete Befüllöffnung eine Verschlussklappe installiert ist, die schwenkbeweglich ist und aus einer Verschlussstellung, in der sie den Kanal versperrt, in eine Öffnungsstellung, in der sie den Kanalquerschnitt freigibt, bewegbar ist, wobei die Verschlussklappe einen Mitnehmerhebel aufweist, der in der Verschlussstellung in den Zylinder hineinragt und gegen den Teile des verstellbaren Kolbens in der Befüllstellung angedrückt sind und die Verschlussklappe in der Öffnungsstellung halten, wobei in der Brühstellung der Mitnehmerhebel freigegeben ist und die Verschlussklappe in die Sperrlage verschwenkt ist.

Im Stand der Technik ist die Befüllöffnung durch Teile des beweglichen Kolbens verschlossen, wobei nicht auszuschließen ist, dass Kaffeemehl oder dergleichen durch die Befüllöffnung nachrieselt, wenn der verschiebliche Kolben bewegt wird, so dass Bestandteile des Kolbens oder Kolbenmantels durch Kaffeemehl verunreinigt werden können.

Um dies zu vermeiden, ist gemäß der Erfindung in den Kanal, der die Befüllöffnung bildet, eine Verschlussklappe installiert, die schwenkbeweglich ist. In einer Verschlussstellung wird der Kanal durch diese Verschlussklappe verschlossen, so dass kein Kaffeepulver oder dergleichen nachrieseln kann und Bestandteile des Kolbens oder dessen Antriebs verunreinigen könnte. Sofern der bewegliche Kolben in die Grundstellung zurückfährt, so dass das Einfüllen von Kaffeemehl möglich ist, wird die Verschlussklappe durch den verstellbaren Kolben, der an dem Mitnehmerhebel angreift, in die Öffnungslage verschwenkt, so dass dann durch den Kanal Kaffeepulver oder dergleichen zugeführt werden kann.

Bevorzugt ist dabei vorgesehen, dass die Verschlussklappe entgegen der Kraft einer Schließfeder in die Öffnungsstellung bewegbar ist.

Beispielsweise kann auf Gelenkzapfen der Verschlussklappe eine Drehfeder aufgesteckt sein, mittels derer die Zwangsschließung der Verschlussklappe erfolgt, wenn diese beziehungsweise deren Mitnehmer vom beweglichen Kolben freigegeben ist.

Eine zudem bevorzugte Ausbildung wird darin gesehen, dass der axial verstellbare Kolben stirnseitig an seiner der Verschlussplatte zugewandten Seite ein in das Material des Kolbens eingeformtes Kaffeesieb aufweist und in einem Kolbenschaft ein Crema-Ventil aufweist, dass mit einer Heißwasser-Zufuhrleitung verbunden ist.

Durch eine solche Ausbildung wird die Baulänge des Kolbens samt Kaffeesieb verringert. Der Kolben wird mit dem eingeformten Kaffeesieb an der Kolbenstange befestigt, beispielsweise mit dieser verschraubt, wobei hierdurch zugleich das in die Kolbenstange eingesetzte Cremaventil fixiert ist.

Eine weitere, die Betriebssicherheit verbessernde Ausbildung wird darin gesehen, dass ein als geschlossenes Gehäuse ausgebildeter Support vorgesehen ist, in dem die Stellantriebe, insbesondere Antriebsmotoren, angeordnet sind, wobei Anschlussteile der Stellantriebe aus einer Seitenfläche des Supports ausmünden, und dass die Brühgruppe quer zur Längsmittelachse der Brühkammer an den Support ansteckbar ist, so dass die Kupplungsteile für den Kolbenantrieb und für den Verschlussplattenantrieb in Eingriff mit den Anschlussteilen der Stellantriebe sind, wobei der Support eine Führung aufweist, in die die Brühgruppe einführbar und entlang des Lagerstabes in die Montagesolllage verschiebbar ist.

Gemäß dieser Ausgestaltung sind sämtliche Stellantriebe und dergleichen sowie die elektrischen Anschlüsse in dem als geschlossenes Gehäuse ausgebildeten Support ausgebildet und angeordnet. Die Brühgruppe kann in einfacher Weise an das Gehäuse des Supportes angesteckt werden, um die Kupplung mit den Antriebsmotoren sicher zu stellen, wobei die Brühgruppe nur solche Bestandteile umfasst, die einer Reinigung bedürfen und einem betriebsbedingten Verschleiß unterliegen können. Zur Montage der Brühgruppe kann diese zunächst auf den Lagerstab aufgelegt werden und mit dem anderen Endbereich auf einer Führungskontur des Supportes aufliegen. Anschließend kann die Brühgruppe in Richtung auf den Support verschoben werden, wobei dann die entsprechenden Anschlussteile oder Kupplungsmittel zwischen den Stellantrieben und den angetriebenen Mitteln in Verbindung gebracht sind. In der Montagesolllage ist die gesamte Brühgruppe dann betriebsbereit.

Bevorzugt ist dabei vorgesehen, dass Rastmittel oder lösbare Befestigungsmittel vorgesehen sind, mittels derer die Lage der Brühgruppe am Support arretiert und gesichert ist.

Des Weiteren ist zur Verbesserung der Betriebssicherheit vorgesehen, dass der Kolben eine Kolbenstange aufweist, die als Gewindespindel ausgebildet ist, dass auf der Gewindespindel ein Antriebszahnrad mit Spindelmutter fixiert ist, welches mit einem Schneckenrad in Eingriff ist, das mit dem Motor des ersten Stellantriebs kuppelbar ist, wobei sämtliche Teile innerhalb eines Gehäuseteils der Brühgruppe geschützt angeordnet sind, ein Kupplungsteil des Schneckenrades aus diesem Gehäuseteil vorragt und in Montagesolllage mit der Antriebswelle des in einem Supportgehäuse angeordneten Motors steckgekuppelt ist.

Gemäß dieser Ausgestaltung ist auf der als Gewindespindel ausgebildeten Kolbenstange ein Antriebszahnrad mit Spindelmutter gelagert. Dieses ist mit einem in einem Gehäuseteil der Brühgruppe kugelgelagerten Schneckenrad in Eingriff, dass mittels des Stellantriebes antreibbar ist, der insbesondere in dem Support angeordnet ist. Sämtliche Teile sind innerhalb des Gehäuseteils der Brühgruppe geschützt angeordnet. Lediglich ein Kupplungsteil des Schneckenrades ragt aus dem Gehäuseteil vor. Dieses ist in Montagesolllage mit der Antriebswelle des in dem Supportgehäuse angeordneten Motors steckgekuppelt.

Durch diese Anordnung wird eine konstruktiv einfache und hochbelastbare Antriebseinheit zur Verfügung gestellt, die insgesamt zu einer Verbesserung der Brühgruppe beiträgt.

Ausführungsbeispiele der Erfindung sind in der Zeichnung dargestellt und im Folgenden näher beschrieben. Es zeigt:
- Figur 1: eine komplette Brühgruppe in Schrägansicht;
- Figur 2: einen Ausschnitt der Figur 1 in Seitenansicht mit entfernter Abdeckplatte und geöffneter Verschlussplatte;
- Figur 3: desgleichen bei geschlossener Verschlussplatte;
- Figur 4: eine analoge Ansicht mit Einzeldarstellung einer Abstreifvorrichtung;
- Figur 5: eine Schnittansicht der Brühgruppe bei vorgeschobenem beweglichem Kolben;
- Figur 6: desgleichen bei in Ruhelage zurückgezogenem verschieblichen Kolben;
- Figur 7: eine Schnittdarstellung des Verschieblichen Kolbens;
- Figur 8: eine an einem Support angeordnete Brühgruppe in Betriebslage in Schrägansicht;
- Figur 9: desgleichen in Seitenansicht;
- Figur 10: die Brühgruppe allein in Seitenansicht;
- Figur 11: die Brühgruppe in Seitenansicht in einer anderen Betriebslage;
- Figur 12: Einzelheiten des Antriebs in Schrägansicht;
- Figur 13: eine alternative Ausführungsform in der Ansicht gemäß Figur 2 gesehen;
- Figur 14: desgleichen in der Ansicht gemäß Figur 3 gesehen;
- Figur 15: eine alternative Ausführungsform in der Ansicht analog Figur 8 gesehen;
- Figur 16: den Support gemäß Figur 15 ohne Brühgruppe;
- Figur 17: die Ausführungsform nach Figur 15 in Seitenansicht.

In der Zeichnung ist eine Brühgruppe und deren wesentliche Bestandteile gezeigt. Eine solche Brühgruppe ist Bestandteil einer Kaffeemaschine und dient insbesondere zur Zubereitung von Kaffeegetränken oder Espresso.

Die Brühgruppe weist eine Brühkammer 1 zur Aufnahme von gemahlenem Kaffeemehl auf. Des Weiteren weist die Brühgruppe Teile für die Verdichtung des in der Brühkammer 1 befindlichen Kaffeemehls und zum Auswerfen des feuchten Kaffeemehlrestes aus der Brühkammer 1 auf. Zudem sind Anschlüsse für die Zufuhr von Heißwasser und für den Ablauf des entsprechenden Kaffeefiltrates vorgesehen.

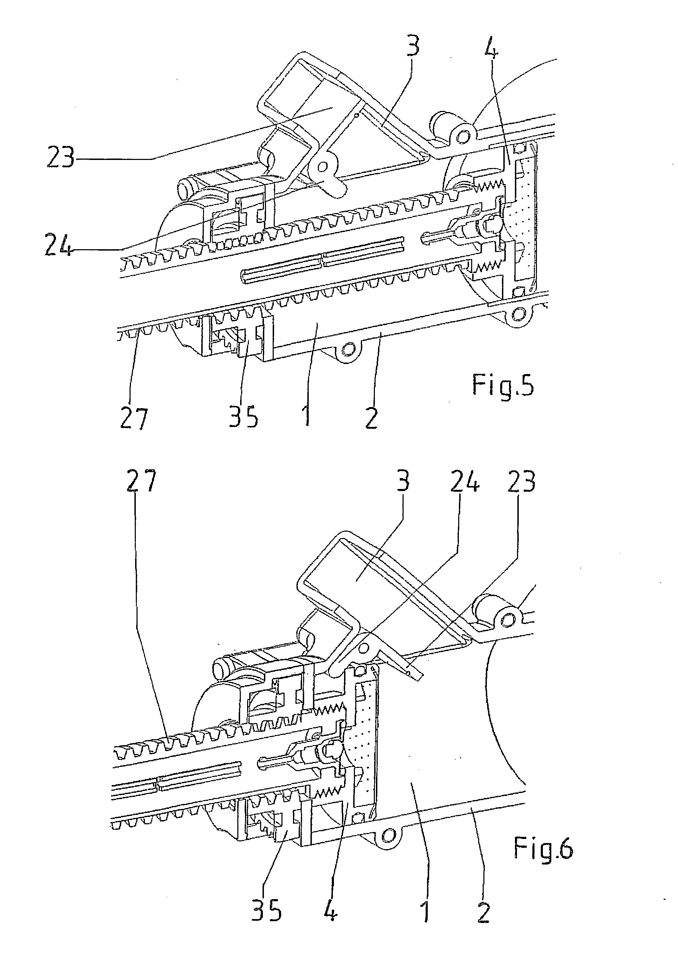

Die Brühkammer 1 ist durch einen stationären unbeweglich angeordneten Zylinder 2 gebildet, der auf der Oberseite nahe seines ersten Endes eine Befüllöffnung 3 für Kaffeemehl aufweist. Als Teil für die Verdichtung des in der Brühkammer 1 eingefüllten Kaffeemehls ist am ersten Ende des Zylinders 2 ein mittels eines ersten Stellantriebes axial verstellbarer Kolben 4 vorgesehen, der in der Befüllstellung gemäß Figur 6 die Befüllöffnung 3 freilässt und in der Brühstellung gemäß Figur 5 über die Befüllöffnung 3 hinaus in Richtung auf eine am zweiten Ende des Zylinders 2 vorgesehene Verschlussplatte 5 mit einem zweiten Stellantrieb verstellt ist. Die Verschlussplatte 5 verschließt in der Befüllstellung und in der Brühstellung das zweite Ende des Zylinders 2, während sie in der Auswurfstellung das zweite Ende des Zylinders 2 freigibt. In der Auswurfstellung wird der Kolben 4 bei in Freigabelage verstellter Verschlussplatte 5 mittels des ersten Stellantriebes in eine Auswurfstellung in Richtung zum zweiten Ende des Zylinders 2 verstellt. Der Kolben 4 und die Verschlussplatte 5 sind nach dem Auswerfen des feuchten Kaffeemehlrestes in die Ausgangsstellung zurück verstellbar. In der Zeichnung nicht gezeigt sind Anschlüsse für Heißwasserzuführ- und Filtratablauf am Kolben 4 und an der Verschlussplatte 5.

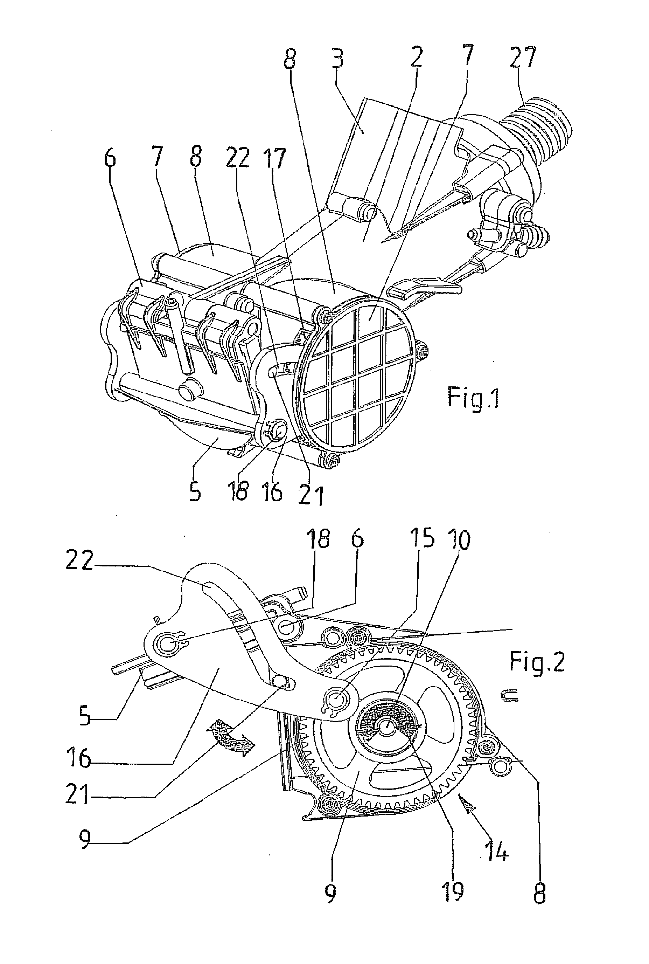

Die Verschlussplatte 5 ist außen am Zylinder 2 nahe dessen zweiten Ende angelenkt. Um diese erste Anlenkstelle 6 ist die Verschlussplatte 5 aus der Ausgangsstellung gemäß Figur 1 beziehungsweise 3 in die Freigabestellung gemäß Figur 2 verschwenkbar.

Seitlich am Zylinder 2 sind außenseitig einander gegenüberliegend mit Deckeln 7 verschlossene Kammern 8 ausgebildet, in denen jeweils ein als Zahnrad ausgebildetes Steuerrad 9 drehbar gelagert ist. Das Drehlager ist bei 10 angegeben. Die Steuerräder 9 sind mit einer Zahnradwelle 11 in Eingriff, die in einer Gehäusetasche 12 gelagert ist und mit einem Kupplungsbereich 13 axial aus der Gehäusetasche 12 vorragt. Zum Eingriff der Zahnradwelle 11 mit den Steuerrädern 9 ist in dem Gehäuseteil 8 ein Schlitz 14 vorgesehen.

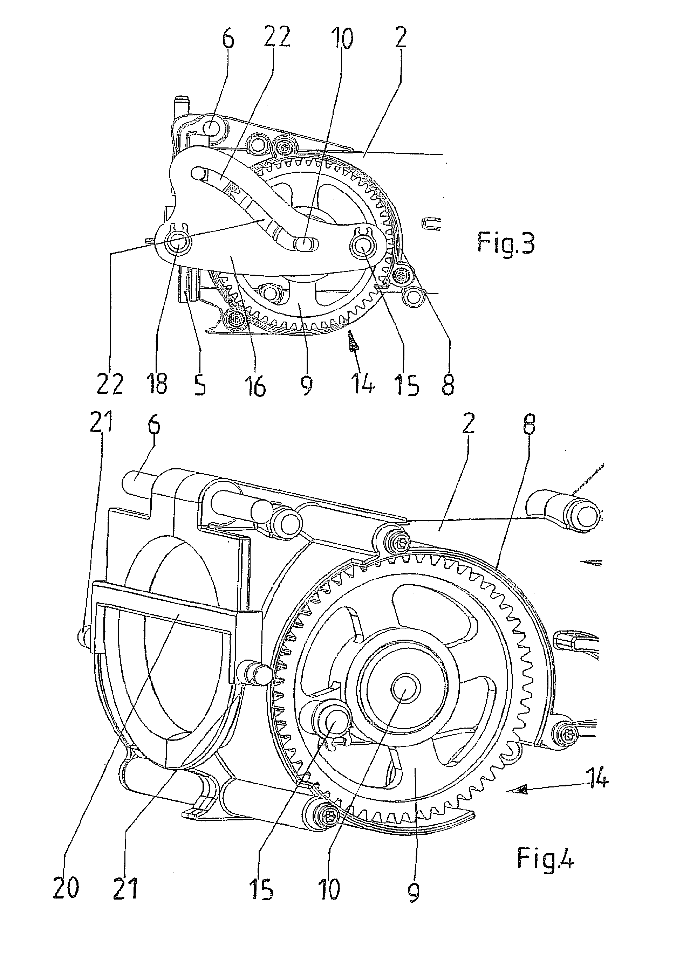

An den Steuerrädern 9 sind exzentrisch an zweiten Anlenkstellen 15 Pleuelstangen 16 angelenkt, die jeweils einen radialen Schlitz 17 der Kammer 8 durchgreifen und mit den aus den Schlitzen 17 vorragenden Enden an der Verschlussklappe 5 außenseitig, auf deren dem Kolben 4 abgewandten Seite, mit Abstand von der ersten Anlenkstelle 6, an dritten Anlenkstellen 18 angelenkt sind. Wie insbesondere in Figur 3 gezeigt, liegen die zweiten und dritten Anlenkstellen 15, 18 sowie die Drehachsen 10 der Steuerräder 9 in der Ausgangsstellung gemäß Figur 1 und Figur 3 auf einer gedachten geraden Linie, die parallel zur Längsmittelachse des Zylinders 2 verläuft. Hierdurch wird erreicht, dass im geschlossenen Zustand, wenn der Brühdruck und der Kolbenanpressdruck mit einer hohen Kraft auf der Verschlussplatte 5 lasten, sich die Pleuel in einer Position befinden, in der aufgrund des Totpunktes theoretisch kein Moment um die Steuerradachse (10) ausgeübt wird.

Sofern die Steuerräder 9 durch den Antrieb in Drehrichtung des Pfeiles 19 bewegt werden, so wird bei Drehbewegung entgegen dem Uhrzeigersinn die Stellung gemäß Figur 2 erreicht, während bei Drehung im Uhrzeigersinn die Stellung gemäß Figur 3 eingestellt ist.

Zusätzlich ist am zweiten Ende des Zylinders 2 eine Abstreifvorrichtung 20 vorgesehen, die quer zur Zylindermittellängsachse verstellbar ist. Diese Abstreifvorrichtung 20 weist seitlich vorragende Mitnehmer 21 auf, die jeweils in einen Steuerschlitz 22 der Pleuelstangen 16 eingreifen, so dass die Abstreifvorrichtung 20 bei nahezu vollständig geöffneter Verschlussplatte 5 beginnend bis zur Position der vollständig geöffneten Verschlussplatte 5 zwangsweise aus einer Lage außerhalb der Fluchtlinie, die vom Zylinder 2 aufgespannt ist, in eine Lage in die Fluchtlinie verstellt ist, so dass an dem verstellbaren Kolben 4 anhaftender Tresterkuchen abgestreift wird. Die Abstreifvorrichtung 20 wird zwangsweise zurückverstellt, wenn die Verschlussplatte aus der Stellung gemäß Figur 2 in die Stellung gemäß Figur 3 zurückgeschwenkt wird, wobei die Verstellbewegung der Abstreifvorrichtung 20 der Schließbewegung der Klappe 5 voreilend ist.

Die Steuerschlitze 22 in den Pleueln 16 sind so gestaltet, dass sie über den wesentlichen Weg der Pleuelstange bei deren Betätigung mittels des Steuerrades 9 zwängungsfrei bezüglich der Mitnehmer 21 die Position beibehalten. Erst im letzten Bereich der Steuerschlitze 22 sind diese so konturiert, dass bei weiterer Bewegung der Verschlussplatte 5 eine Zwangsverschiebung der Abstreifvorrichtung erfolgt.

Eine weitere besonders vorteilhafte Ausgestaltung ist in Figur 5 und 6 verdeutlicht. Hier ist in die als Kanal ausgebildete Befüllöffnung 3 eine Verschlussklappe 23 installiert, die schwenkbeweglich ist. Sie ist aus einer Verschlussstellung, die in Figur 5 gezeigt ist, in der sie den Kanal 3 versperrt, in eine Öffnungsstellung, die in Figur 6 gezeigt ist, bewegbar, in der sie den Kanalquerschnitt freigibt. Die Verschlussklappe 23 weist einen Mitnehmerhebel 24 auf, der in der Verschlussstellung gemäß Figur 5 in den Zylinder 2 hineinragt und gegen den Teile des verstellbaren Kolbens 4 angedrückt sind und die Verschlussklappe 23 in der Öffnungsstellung halten. In der Brühstellung gemäß Figur 5 ist der Mitnehmer 24 freigegeben und die Verschlussklappe 23 verschwenkt selbstständig in die Sperrlage gemäß Figur 5, wobei die Schließbewegung durch eine Schließfeder unterstützt ist.

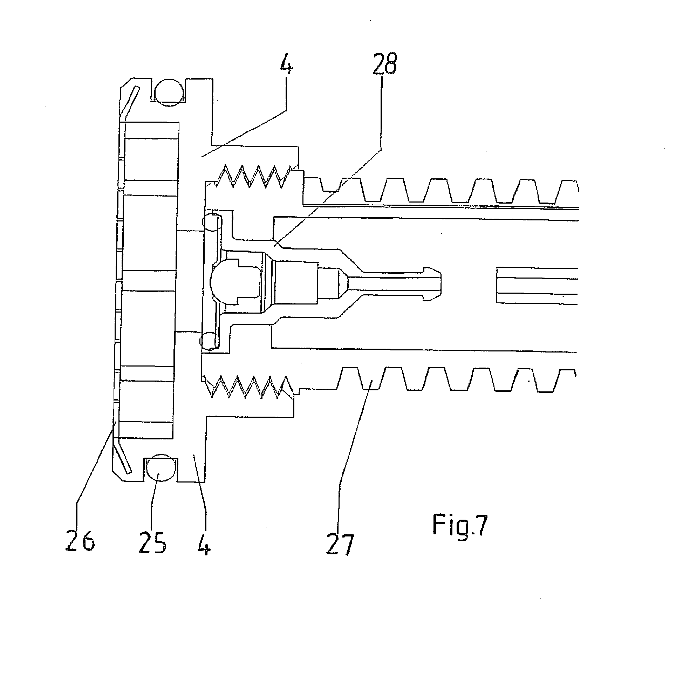

Eine weitere Besonderheit ist in Figur 7 gezeigt. Der axial verstellbare Kolben 4 weist umlaufend eine Dichtung 25 auf und stirnseitig an seiner der Verschlussplatte 5 zugewandten Seite ein Kaffeesieb 26, welches in das Material des Kolbens 4 eingeformt ist. Hierdurch wird die Baulänge des Kolbens samt Sieb minimiert. Der Kolben 4 ist auf die Kolbenstange 27 aufgeschraubt, wobei durch diese Fixierung gleichzeitig eine Fixierung des dort eingesetzten Cremaventils 28 erfolgt.

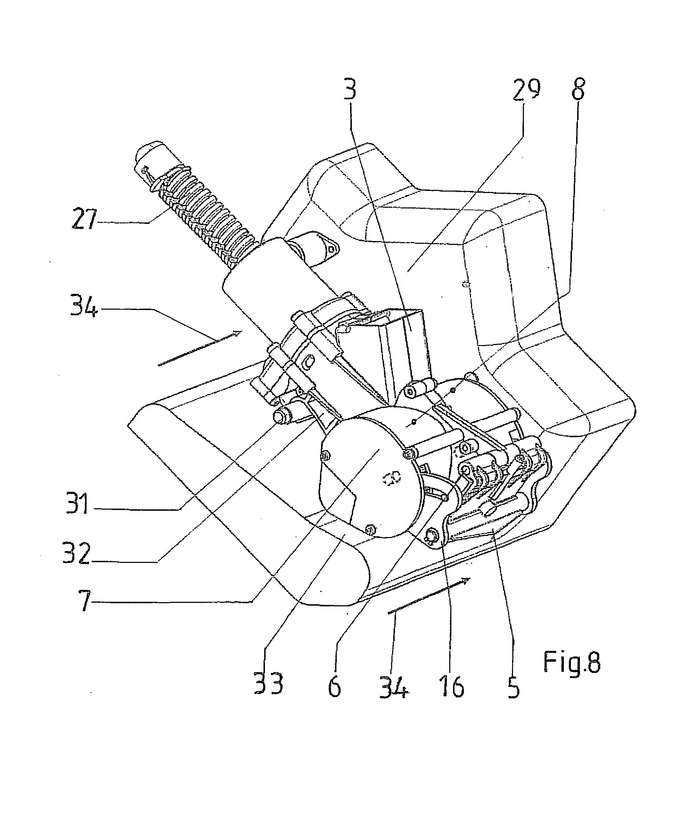

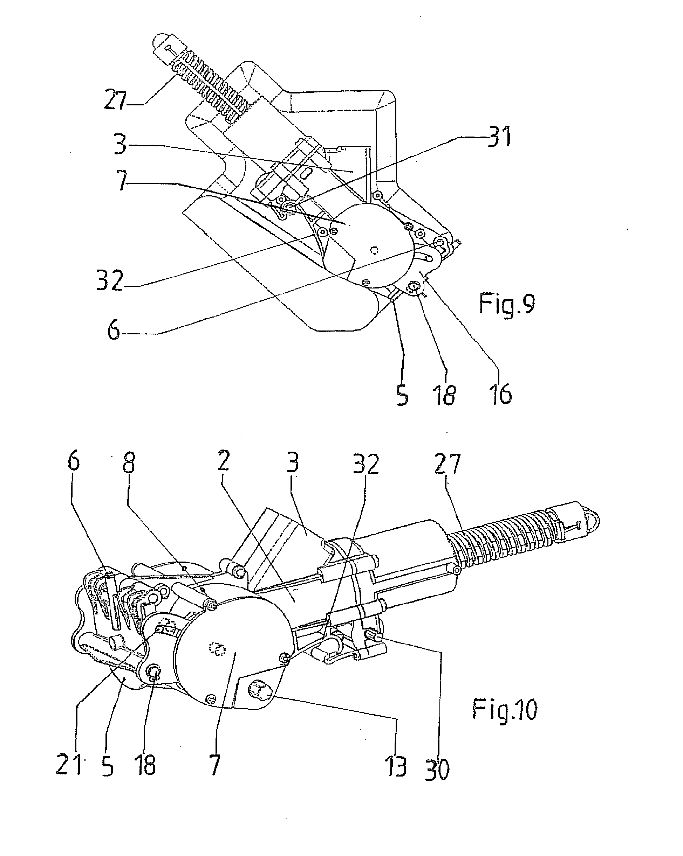

Eine weitere Besonderheit zeigen die Figuren 8 bis 12.

Gemäß dieser Ausgestaltung ist ein als geschlossenes Gehäuse ausgebildeter Support 29 vorgesehen, in dem die Stellantriebe, insbesondere Antriebsmotoren angeordnet sind. Aus einer Seitenfläche des Supports 29 münden Anschlussteile der Stellantriebe aus. Dies ist in der Zeichnung nicht gezeigt. Die Brühgruppe insgesamt ist quer zur Mittellängsachse der Brühkammer an den Support 29 ansteckbar, so dass die Kupplungsteile 13, 30 für den Kolbenantrieb beziehungsweise den Verschlussplattenantrieb in Eingriff mit den Anschlussteilen der Stellantriebe sind. Der Support weist zudem einen Lagerstab 31 auf, an den die Brühgruppe mit einem entsprechenden Hakenelement 32 anhängbar ist und entlang des Lagerstabes 31 verschiebbar ist. Ferner weist der Support 29 eine Führungskontur 33 mit Abstand vom Lagerstab 31 auf, entlang derer die Brühgruppe in Montagesolllage verschiebbar ist, wie durch die Pfeile 34 in Figur 8 angegeben. Zur Sicherung der Solllage sind vorzugsweise Rastmittel oder lösbare Befestigungsmittel vorgesehen.

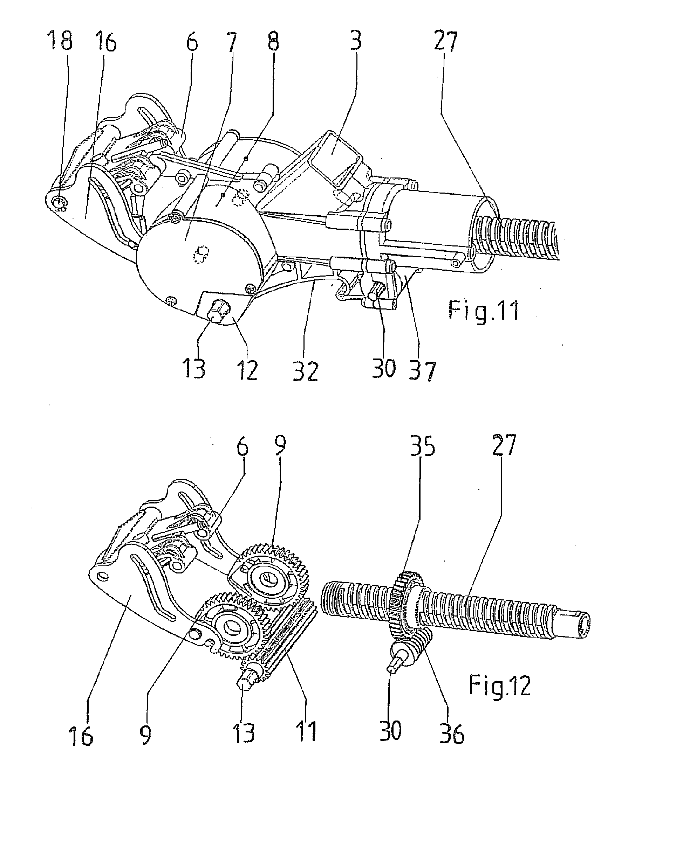

Eine Besonderheit ist noch in Figur 11 und 12 gezeigt. Die Kolbenstange 27 des verstellbaren Kolbens 4 ist als Gewindespindel ausgebildet. Auf der Gewindespindel ist ein Antriebszahnrad 35 mit Spindelmutter gelagert, welches mit einem Schneckenrad 36 in Eingriff ist, das in einer Gehäusetasche 37 des Brühgruppengehäuses angeordnet ist. Das Kupplungsteil 30 des Schneckenrades 36 ragt aus dem Gehäuseteil 37 seitlich vor und ist in Montagesolllage mit der Antriebswelle eines in dem Supportgehäuse 29 angeordnetem Motor steckgekuppelt.

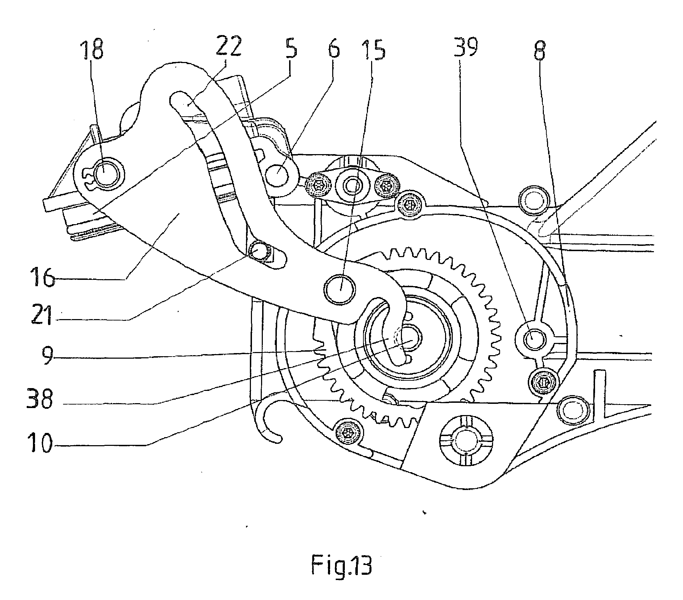

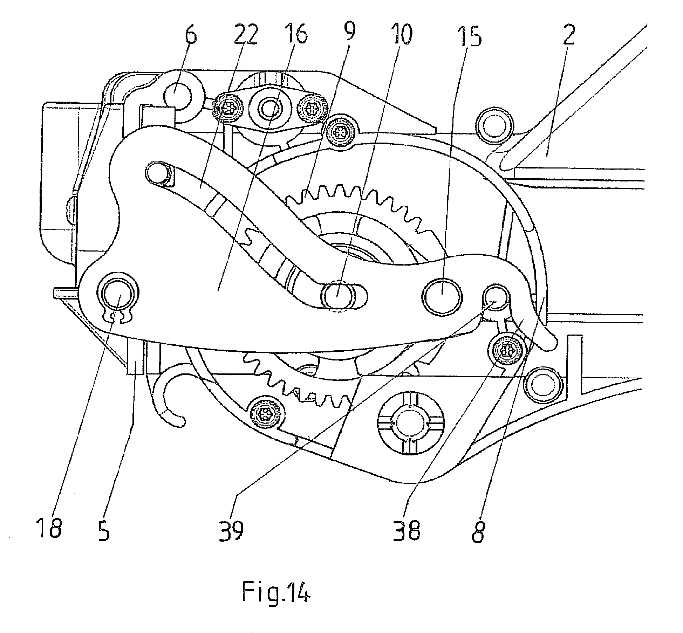

In Figur 13 und 14 ist eine Variante gezeigt. Hierbei ist in der Kammer 8 ein Bolzen 39 vorgesehen, der mit einem hakenartigen Element 38 am Ende der Pleuelstange 16 zusammenwirkt. Das hakenartige Element 38 überragt die Pleuelstange 16 an ihren über die Anlenkstelle vorgesehenen Endbereich. In der Position, in welcher die Verschlussplatte 5 geöffnet ist, ist das hakenartige Element 38 von dem Bolzen 39 entfernt. Durch die entsprechende Drehung des Steuerrades 9 wird das an der zweiten Anlenkstelle 15 angebundene Ende der Pleuelstange 16 beim Schließen der Verschlussplatte 5 so bewegt, dass das hakenartige Element 38 über den Bolzen 39 greift, wie dies in Figur 14 gezeigt ist. In dieser Stellung wird hierdurch erreicht, dass die auf den Mechanismus beim Brühen einwirkenden Betriebskräfte aufgenommen werden und eine sichere Verschlusslage der Verschlussplatte 5 erreicht wird.

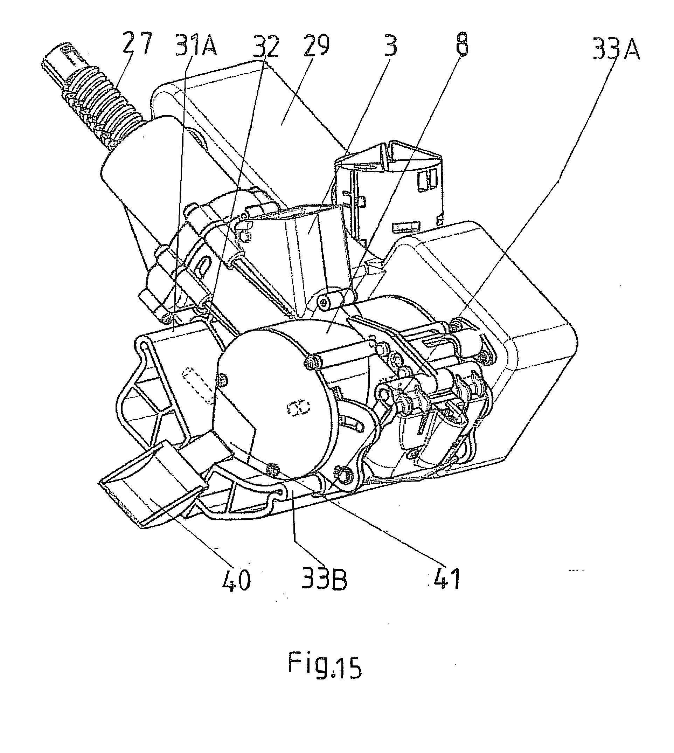

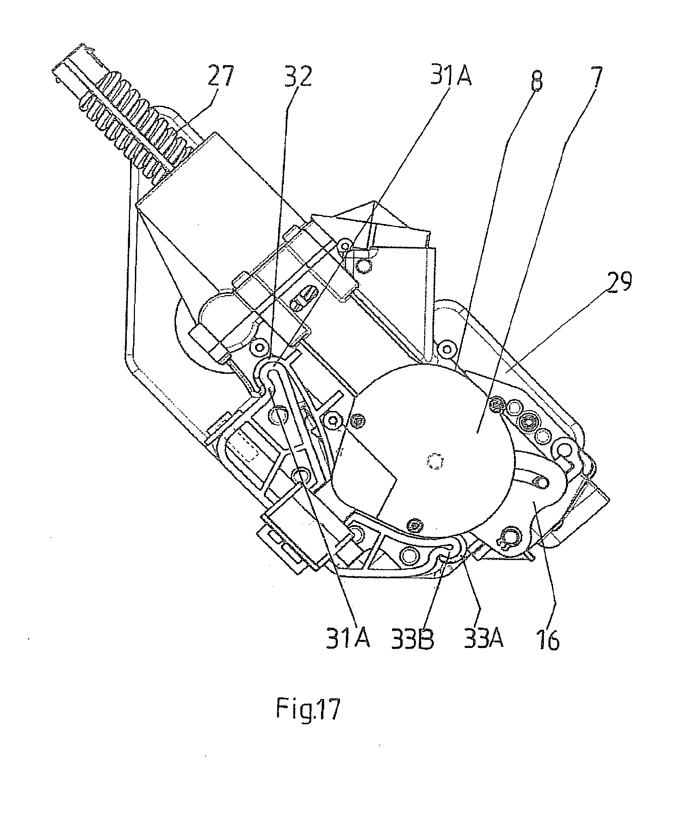

Eine weitere Variante ist in den Figuren 15 bis 17 gezeigt. Bei dieser Ausgestaltung, die in der Darstellung der Darstellung gemäß Figur 8 ähnelt, ist der Lagerstab 31 durch eine Lagerkontur 31 A ersetzt. Die Führungskontur 33 ist durch die Führungskontur 33 B ersetzt. Analog weist die Brühgruppe einerseits ein Hakenelement 32 zum Zusammenwirken mit der Lagerkontur 31 A auf und ein Hakenelement 33 A, welches mit der Führungskontur 33 B zusammenwirkt. Hierdurch wird im Ergebnis eine schwalbenschwanzartige Führung erreicht, durch die eine sichere Zuführung der Brühgruppe zu dem Support 29 erreicht wird und ebenso eine sichere Lage in der Solllage, wie sie in Figur 15 gezeigt ist. Als Sicherungselement für die Betriebslage ist ein gefederter Hebel 40 vorgesehen, der mittels Federkraft in die Solllage gedrängt wird, die in den Zeichnungsfiguren 15 und 16 gezeigt ist. Beim Aufstöcken der Brühgruppe auf den Support 29 wird das nach oben ragende Ende des Hebels entgegen der Federkraft nach unten gedrückt, so dass die Brühgruppe in die Sollposition eingeschoben werden kann. Nach Erreichen der Sollposition schwenkt der Hebel 40 nach oben, in die Betriebslage, wie sie beispielsweise in Figur 15 gezeigt ist, bei der das bei 41 angegebene obere Ende des Hebels an der Seite der Brühgruppe anliegt und so eine seitliche Bewegung der Brühgruppe verhindert.

Damit der Sitz der Brühgruppe in der Solllage definiert ist, ist zusätzlich am Support 29 eine gefederte Platte 42 vorgesehen, gegen die die Brühgruppe angedrückt wird, so dass die Platte 42 unter Federkraft an der Seite der Brühgruppe anliegt, die dem Hebel 40 abgewandt ist.

Gemäß dieser Ausführungsform wird die Brühgruppe seitlich in den Support 29 eingeführt. Durch die entsprechende Führung mit den Elementen 31 A, 32, 33 B und 33 A wird eine Bewegung in andere Richtungen als der Einführungsrichtung unterbunden. Kurz vor der Endstellung trifft die Brühgruppe auf die federnd gelagerte Platte 42, die bis zur Einrastposition der Brühgruppe in Richtung des Supportes 29 entgegen Federkraft zurückgedrückt wird. Die Endstellung wird durch das Rasten des Hebels 40 mit der Haltekontur 41 erreicht, so dass die Brühgruppe in der Sollposition gesichert gehalten ist. Sofern die Brühgruppe entnommen werden soll, wird der Hebel 40 mit der Kontur 41 so bewegt, dass die Kontur 41 nach unten verschwindet, so dass die Brühgruppe nun seitlich beispielsweise mittels der gefederten Platte 42 bewegt wird und manuell aus der Führungskontur herausgezogen werden kann.

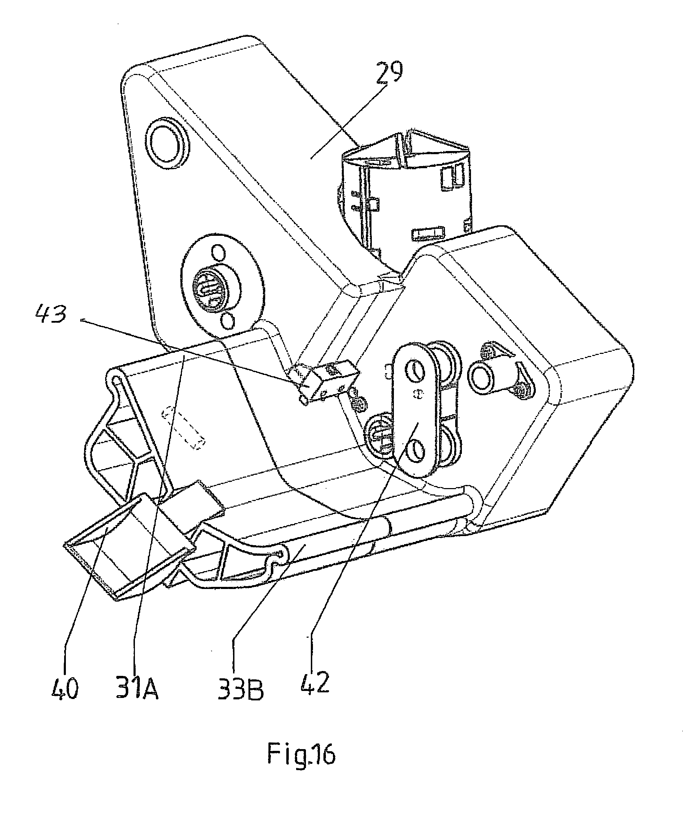

In Figur 16 ist am Support 29 zusätzlich ein Mikroschalter 43 vorgesehen, der mit der Steuerung des Supportes 29 bzw. der damit ausgestatteten Kaffeemaschine in Verbindung steht und der durch eine Pleuelstange 16 oder durch eines der hakenartigen Elemente 38 betätigt wird, wenn sich die Verschlussplatte 5 in der korrekten Schließlage befindet.

Die Erfindung stellt eine äußerst funktionelle, betriebssichere und haltbare Brühgruppe zur Verfügung.

## Patentansprüche

1. Brühgruppe für eine Kaffeemaschine, insbesondere zur Zubereitung von Espresso, mit einer Brühkammer (1) zur Aufnahme von gemahlenem Kaffeemehl sowie mit Teilen für die Verdichtung des in der Brühkammer (1) befindlichen Kaffeemehls und zum Auswerfen des feuchten Kaffeemehlrestes aus der Brühkammer (1), wobei des Weiteren Anschlüsse für die Zufuhr von Heißwasser und für den Ablauf des Filtrates vorgesehen sind, wobei die Brühkammer (1) durch einen stationären unbeweglich angeordneten Zylinder (2) gebildet ist, der seitlich nahe seines ersten Endes eine Befüllöffnung (3) für Kaffeemehl aufweist, als Teil für die Verdichtung des in die Brühkammer (1) eingefüllten Kaffeemehls am ersten Ende des Zylinders (2) ein mittels eines ersten Stellantriebes axial verstellbarer Kolben (4) vorgesehen ist, der in der Befüllstellung die Befüllöffnung (3) freilässt und in der Brühstellung über die Befüllöffnung (3) hinaus in Richtung auf eine am zweiten Ende des Zylinders (2) vorgesehene Verschlussplatte (5) mit zweitem Stellantrieb verstellt ist, die in der Befüllstellung und in der Brühstellung das zweite Ende des Zylinders (2) verschließt und in der Auswurfstellung das zweite Ende des Zylinders (2) freigibt, wobei der Kolben (4) in der Auswurfstellung bei in Freigabelage verstellter Verschlussplatte (5) mittels des ersten Stellantriebes in eine Auswurfstellung in Richtung zum zweiten Ende des Zylinders (2) verstellbar ist, wobei der Kolben (4) und die Verschlussplatte (5) nach dem Auswerfen des feuchten Kaffeemehlrestes in die Ausgangsstellung zurück verstellbar sind, und wobei die Anschlüsse für Heißwasserzufuhr und Filtratablauf und an der Verschlussplatte (5) und an dem Kolben (4) vorgesehen sind, **dadurch gekennzeichnet, dass** die Verschlussplatte (5) außen am Zylinder (2) nahe dessen zweitem Ende angelenkt und um diese erste Anlenkstelle (6) aus der Ausgangsstellung in die Freigabestellung verschwenkbar ist, dass seitlich am Zylinder (2) außenseitig einander gegenüberliegend mit Deckeln (7) geschlossene Kammern (8) ausgebildet sind, in denen jeweils ein als Zahnrad ausgebildetes Steuerrad (9) drehbar gelagert ist, wobei die Steuerräder (9) mit einer Zahnradwelle (11) in Eingriff sind, die in einer Gehäusetasche (12) gelagert ist und mit einem Kupplungsbereich (13) axial aus der Gehäusetasche (12) vorragt, dass an den Steuerrädern (9) Pleuelstangen (16) exzentrisch an zweiten Anlenkstellen (15) angelenkt sind, die jeweils einen radialen Schlitz (17) der Kammer (8) durchgreifen und mit den aus den Schlitzen (17) vorragenden Enden an der Verschlussklappe (5) außenseitig, auf deren dem Kolben (4) abgewandten Seite -mit Abstand von der ersten Anlenkstelle (6) der Verschlussplatte (5) am Zylinder (2)- an dritten Anlenkstellen (18) angelenkt sind, wobei die zweiten und dritten Anlenkstellen (15,18) und die Drehachsen (10) der Steuerräder (9) in der Ausgangsstellung auf einer gedachten Geraden liegen, die parallel zur Längsmittelachse des Zylinders (2) verläuft.

2. Brühgruppe nach Anspruch 1, **dadurch gekennzeichnet, dass** am zweiten Ende des Zylinders (2) eine Abstreifvorrichtung (20) quer zur Zylindermittellängsachse verstellbar angebracht ist, die seitlich vorragende Mitnehmer (21) aufweist, die jeweils in einen Steuerschlitz (22) eingreifen, der in den Pleuelstangen (16) ausgebildet ist, so dass die Abstreifvorrichtung (20) bei nahezu vollständig geöffneter Verschlussplatte (5) beginnend bis zur Position der vollständig geöffneten Verschlussplatte (5) zwangsweise aus einer Lage außerhalb der Fluchtlinie, die vom Zylinder (2) aufgespannt ist, in eine Lage in dessen Fluchtlinie verstellt ist, so dass an dem verstellbaren Kolben (4) anhaftender Tresterkuchen abgestreift wird, und dass die Abstreifvorrichtung (20) bei aus der Öffnungsstellung zurück in die Ausgangsstellung verschwenkter Verschlussplatte (5) gegenüber deren Schließbewegung voreilend zurückverstellt ist.

3. Brühgruppe nach Anspruch 1 oder 2, **dadurch gekennzeichnet, dass** in die als Kanal ausgebildete Befüllöffnung (3) eine Verschlussklappe (23) installiert ist, die schwenkbeweglich ist und aus einer Verschlussstellung, in der sie den Kanal versperrt, in eine Öffnungsstellung, in der sie den Kanalquerschnitt freigibt, bewegbar ist, wobei die Verschlussklappe (23) einen Mitnehmerhebel (24) aufweist, der in der Verschlussstellung in den Zylinder (2) hineinragt und gegen den Teile des verstellbaren Kolbens (4) in der Befüllstellung angedrückt sind und die Verschlussklappe (23) in der Öffnungsstellung halten, wobei in der Brühstellung der Mitnehmerhebel (24) freigegeben ist und die Verschlussklappe (23) in die Sperrlage verschwenkt ist.

4. Brühgruppe nach Anspruch 3, **dadurch gekennzeichnet, dass** die Verschlussklappe (23) entgegen der Kraft einer Schließfeder in die Öffnungsstellung bewegbar ist.

5. Brühgruppe nach einem der Ansprüche 1 bis 4, **dadurch gekennzeichnet, dass** der axial verstellbare Kolben (4) stirnseitig an seiner der Verschlussplatte zugewandten Seite ein in das Material des Kolbens (4) eingeformtes Kaffeesieb (26) aufweist und in einem Kolbenschaft ein Crema-Ventil (28) aufweist, dass mit einer Heißwasser-Zufuhrleitung verbunden ist.

6. Brühgruppe nach einem der Ansprüche 1 bis 5, **dadurch gekennzeichnet, dass** ein als geschlossenes Gehäuse ausgebildeter Support (29) vorgesehen ist, in dem die Stellantriebe, insbesondere Antriebsmotoren, angeordnet sind, wobei Anschlussteile der Stellantriebe aus einer Seitenfläche des Supports (29) ausmünden, und dass die Brühgruppe quer zur Längsmittelachse der Brühkammer (1) an den Support (29) ansteckbar ist, so dass die Kupplungsteile (13),(30) für den Kolbenantrieb und für den Verschlussplattenantrieb in Eingriff mit den Anschlussteilen der Stellantriebe sind, wobei der Support (29) einen Lagerstab (31) aufweist, an den die Brühgruppe anhängbar und entlang des Lagerstabes (31) in die Montagesolllage verschiebbar ist, und der Support (29) eine Führungskontur (33) mit Abstand vom Lagerstab (31) aufweist, entlang derer die Brühgruppe in die Montagesolllage verschiebbar ist.

7. Brühgruppe nach Anspruch 6, **dadurch gekennzeichnet, dass** Rastmittel oder lösbare Befestigungsmittel vorgesehen sind, mittels derer die Lage der Brühgruppe am Support (29) arretiert und gesichert ist.

8. Brühgruppe nach einem der Ansprüche 1 bis 7, **dadurch gekennzeichnet, dass** der Kolben (4) eine Kolbenstange (27) aufweist, die als Gewindespindel ausgebildet ist, dass auf der Gewindespindel ein Antriebszahnrad (35) mit Spindelmutter gelagert ist, welches mit einem Schneckenrad (36) in Eingriff ist, das mit dem Motor des ersten Stellantriebs kuppelbar ist, wobei sämtliche Teile innerhalb eines Gehäuseteils (37) der Brühgruppe geschützt angeordnet sind, ein Kupplungsteil (30) des Schneckenrades (36) aus diesem Gehäuseteil (37) vorragt und in Montagesolllage mit der Antriebswelle des in einem Supportgehäuse angeordneten Motors steckgekuppelt ist.

## Claims

1. A brewing assembly for a coffee machine, in particular for making espresso coffee, comprising a brewing chamber (1) for receiving ground coffee and comprising parts for compressing the ground coffee contained in the brewing chamber (1) and for ejecting the humid ground coffee remainder from the brewing chamber (1), further ports being provided for supplying hot water and for discharging the filtrate, the brewing chamber (1) being formed by a stationary unmovable cylinder (2) that comprises a filling opening (3) for ground coffee laterally close to its first end, as a part for compressing the ground coffee filled into the brewing chamber (1), a piston (4) being axially adjustable by means of a first actuator being provided at the first end of the cylinder (2), in the filling position said piston (4) leaving the filling opening (3) open and in the brewing position being displaced beyond the filling opening (3) in the direction of a closure plate (5) with a second actuator provided at the second end of the cylinder (2), in the filling position and in the brewing position said closure plate (5) closing the second end of the cylinder (2) and in the ejection position releasing the second end of the cylinder (2), in the ejection position the piston (4) being adjustable, when the closure plate (5) is moved into the release position, by means of the first actuator into an ejection position in the direction of the second end of the cylinder (2), after ejection of the humid coffee grounds remainder the piston (4) and the closure plate (5) being movable back into the initial position, and the ports for hot water supply and filtrate discharge being provided at the closure plate (5) and at the piston (4), **characterized in that** the closure plate (5) is hinge-coupled outside of the cylinder (2) close to the second end thereof, and is pivotable about this first pivot point (6) from the initial position into the release position, that laterally to the cylinder (2) on the outside thereof opposed chambers (8) closed with lids (7) are formed, in each of which a control wheel (9) configured as a gear wheel is rotatably mounted, the control wheels (9) being in engagement with a gear shaft (11), which is mounted in a housing pocket (12) and protrudes with a coupling portion (13) axially out of the housing pocket (12), that at the control wheels (9) connecting rods (16) are hinge-coupled eccentrically at second pivot points (15) that respectively pass through radial slots (17) of the chamber (8) and are hinge-coupled with the ends protruding out of the slots (17) at the closure flap (5) on the outside on the side facing away from the piston (4) - at a distance from the first pivot point (6) of the closure plate (5) at the cylinder (2) - at third pivot points (18), the second and third pivot points (15, 18) and the axes of rotation (10) of the control wheels (9) being in the initial position on an imaginary straight line which extends in parallel to the longitudinal center axis of the cylinder (2).

2. The brewing assembly according to claim 1, **characterized in that** at the second end of the cylinder (2) a scraper device (20) is adjustably mounted transversely to the cylinder center axis and comprises laterally projecting cams (21), which respectively engage in control slots (22) that are formed in the connecting rods (16) so that the scraper device (20), starting with an almost fully open closure plate (5) up to the position of the fully open closure plate (5), is forcibly displaced from a position outside of alignment defined by the cylinder (2) to a position in alignment therewith so that any cake of used grounds adhering to the adjustable piston (4) is scraped off, and that the scraper device (20), when the closure plate (5) is pivoted back from the open position back into the initial position, is moved back while being leading in relation to the closing movement thereof.

3. The brewing assembly according to claim 1 or 2, **characterized in that** a closure flap (23) is installed in the filling opening (3) formed as a channel, which closure flap is pivotally movable and is movable from a closing position, in which it blocks the channel, into an open position, in which it frees the channel cross-section, the closure flap (23) having a driving lever (24) which, in the closed position, projects into the cylinder (2), and against which, in the filling position, parts of the adjustable piston (4) are pressed and keep the closure flap (23) in the open position, in the brewing position, the driving lever (24) being released and the closure flap (23) being pivoted into the locking position.

4. The brewing assembly according to claim 3, **characterized in that** the closure flap (23) can be moved against the force of a closing spring into the open position.

5. The brewing assembly according to one of claims 1 to 4, **characterized in that** the axially displaceable piston (4) has at the front side at its side facing toward the closure plate a coffee sieve (26) formed in the material of the piston (4) and in a piston shaft a crema valve (28) that is connected to a hot water supply line.

6. The brewing assembly according to one of claims 1 to 5, **characterized in that** a support (29) in the form of a closed housing is provided, in which said actuators, in particular drive motors, are arranged, wherein connection parts of the actuators open out from one side surface of the support (29), and that the brewing assembly is attachable to the support (29) transversely to the longitudinal central axis of the brewing chamber (1), such that the coupling parts (13), (30) for the piston drive and for the closure plate drive are in engagement with the connecting parts of the actuators, wherein the support (29) comprises a bearing rod (31), at which the brewing assembly is suspensible and slidable along the bearing bar (31) into the desired mounting position, and the support (29) has a guide contour (33) at a distance from the bearing rod (31), along which the brewing assembly can be displaced into the desired mounting position.

7. The brewing assembly according to claim 6, **characterized in that** locking means or releasable fastening means are provided, by means of which the position of the brewing assembly can be locked and secured at the support (29).

8. The brewing assembly according to one of claims 1 to 7, **characterized in that** the piston (4) has a piston rod (27), which is designed as a threaded spindle, that on the threaded spindle, a drive gear (35) with a spindle nut is mounted, which is in engagement with a worm wheel (36) that can be coupled to the motor of the first actuator, wherein all parts are protected within a housing portion (37) of the brewing assembly, a coupling part (30) of the worm wheel (36) projects from this housing portion (37) and in the desired mounting position is coupled by plugging on the drive shaft of the motor disposed in a support housing.

## Revendications

1. Groupe de distribution pour une machine à café, en particulier pour la préparation d'espresso, ayant une chambre d'infusion (1) pour la réception de moulures de café et ayant des pièces pour la compression des moulures de café se trouvant dans la chambre d'infusion (1) et pour l'éjection du reste des moulures de café humide de la chambre d'infusion (1), en outre des raccords étant prévus pour l'alimentation d'eau chaude et la sortie du filtrat, la chambre d'infusion (1) étant réalisée par un cylindre (2) immobile stationnaire, qui comprend une orifice de remplissage (3) pour les moulures de café latéralement près de sa première extrémité, comme une pièce pour la compression des moulures de café remplies dans la chambre d'infusion (1) un piston (4) axialement réglable au moyen d'un premier actionneur étant prévu à la première extrémité du cylindre (2), dans la position de remplissage ce piston laissant exposée l'orifice de remplissage (3) et dans la position d'infusion étant déplacé au-delà de l'orifice de remplissage (3) dans la direction d'une plaque de fermeture (5) prévue à la deuxième extrémité du cylindre (2) avec un deuxième actionneur, dans la position de remplissage et dans la position d'infusion cette plaque de fermeture (9) fermant la deuxième extrémité du cylindre (2) et dans la position d'éjection libérant la deuxième extrémité du cylindre (2), dans la position d'éjection le piston (4) étant ajustable, si la plaque de fermeture (5) est réglée dans la position de libération, au moyen du premier actionneur dans une position d'éjection dans la direction de la deuxième extrémité du cylindre (2), après l'éjection du reste des moulures de café humide le piston (4) et la plaque de fermeture (5) étant réglables en retour dans la position initiale, et les raccords pour l'alimentation d'eau chaude et la sortie du filtrat étant prévus à la plaque de fermeture (5) et au piston (4), **caractérisé en ce que** la plaque de fermeture (5) est articulée à l'extérieur du cylindre (2) près de sa deuxième extrémité, et peut pivoter autour de ce premier point d'articulation (6) à partir de la position initiale dans la position de libération, que latéralement au cylindre (2) à son extérieur des chambres (8) opposées fermées avec des couvercles (7) sont réalisées, dans chacune desquelles une roue de commande (9) conçue sous la forme d'une roue dentée est montée de manière à pouvoir tourner, les roues de commande (9) s'engrenant avec un arbre formant pignon (11), qui est monté dans un compartiment (12) du boîtier et est en saillie avec une partie de couplage (13) axialement hors du compartiment (12) du boîtier, qu'aux roues de commande (9) des bielles (16) sont articulées excentriquement à des deuxièmes points d'articulation (15) qui passent respectivement à travers des fentes radiales (17) de la chambre (8) et sont articulées avec les extrémités saillant des fentes (17) au clapet de fermeture (5) à l'extérieur sur leur côté opposé au piston (4) - à une distance du premier point d'articulation (6) de la plaque de fermeture (5) au cylindre (2) - à des troisièmes points d'articulation (18), les deuxièmes et troisièmes points d'articulation (15, 18) et les axes de rotation (10) des roues de commande (9) se trouvant dans la position initiale sur une ligne droite imaginaire, qui s'étend en parallèle à l'axe central longitudinal du cylindre (2).

2. Groupe de distribution selon la revendication 1, **caractérisé en ce qu'**à la deuxième extrémité du cylindre (2), un dispositif racleur (20) est monté de façon réglable en travers à l'axe central du cylindre et comprend des entraîneurs (21) latéralement en saillie, qui respectivement s'engrènent dans des fentes de commande (22) réalisées dans les bielles (16), de façon que le dispositif racleur (20), à partir d'une plaque de fermeture (5) presque complètement ouverte jusqu'à la position complètement ouverte de la plaque de fermeture (5), soit déplacé de façon forcée à partir d'une position à l'extérieur de la droite d'alignement définie par le cylindre (2) dans une position en alignement de celui-ci, de façon que le gâteau des moulures utilisées adhérant au piston (4) réglable soit enlevé, et que le dispositif racleur (20), si la plaque de fermeture (5) est articulée à partir de la position ouverte en retour dans la position initiale, est remis en avant de son mouvement de fermeture.

3. Groupe de distribution selon la revendication 1 ou 2, **caractérisé en ce qu'**un clapet de fermeture (23) est installé dans l'orifice de remplissage (3) réalisée comme un canal, le clapet de fermeture étant logé de manière à pouvoir pivoter et de manière à pouvoir se déplacer à partir d'une position de fermeture, dans laquelle il barre le canal, dans une position ouverte, dans laquelle il laisse exposée la coupe transversale du canal, le clapet de fermeture (23) ayant un levier entraîneur (24), qui, dans la position fermée, est saillant dans le cylindre (2), et contre qui, dans la position de remplissage, des parties du piston (4) réglable sont poussées et maintiennent le clapet de fermeture (23) dans la position ouverte, dans la position d'infusion, le levier entraîneur (24) étant libéré et le clapet de fermeture (23) étant articulé dans la position d'arrêt.

4. Groupe de distribution selon la revendication 3, **caractérisé en ce que** le clapet de fermeture (23) peut être déplacé contre la force d'un ressort de fermeture dans la position ouverte.

5. Groupe de distribution selon une des revendications 1 à 4, **caractérisé en ce que** le piston (4) axialement déplaçable a à son front à son côté faisant face à la plaque de fermeture une passoire à café (26) réalisée dans le matériau du piston (4) et dans une tige du piston une valve à crème (28), qui est raccordée à une alimentation d'eau chaude.

6. Groupe de distribution selon une des revendications 1 à 5, **caractérisé en ce qu'**un support (29) sous la forme d'un boîtier fermé est prévu, dans lequel les actionneurs, en particulier des moteurs d'entraînement, sont agencés, des pièces de raccordement des actionneurs débouchant à partir d'une face latérale du support (29), et que le groupe de distribution est enfichable au support (29) en travers à l'axe central longitudinal de la chambre d'infusion (1), de façon que les parties de couplage (13), (30) pour l'entraînement du piston et pour l'entraînement de la plaque de fermeture s'engrènent avec les pièces de raccordement des actionneurs, le support (29) comprenant une barre support (31), à laquelle le groupe de distribution peut être suspendu et déplacé le long de la barre support (31) dans la position de consigne de montage, et le support (29) a un contour de guidage (33) à une distance de la barre support (31), le long duquel le groupe de distribution peut être déplacé dans la position de consigne de montage.

7. Groupe de distribution selon la revendication 6, **caractérisé en ce que** des moyens d'encliquetage ou des moyens de fixation amovibles sont prévus, au moyen desquels la position du groupe de distribution peut être arrêtée et bloquée au support (29).

8. Groupe de distribution selon une des revendications 1 à 7, **caractérisé en ce que** le piston (4) a une tige de piston (27), qui est réalisée comme une tige filetée, que sur la tige filetée, une roue dentée d'entraînement (35) avec une écrou de broche est montée, qui s'engrène avec une roue à vis sans fin (36), qui peut être couplée au moteur du premier actionneur, toutes les pièces étant protégées au-dedans d'une partie (37) du boîtier du groupe de distribution, une pièce de couplage (30) de la roue à vis sans fin (36) étant en saillie de cette partie (37) du boîtier et dans la position de consigne de montage étant couplée par enfichage sur l'arbre d'entraînement du moteur logé dans un boîtier de support.
